# EUROPÄISCHE PATENTSCHRIFT

(11) **EP 1 246 037 B1**
(45) Veröffentlichungstag und Bekanntmachung des Hinweises auf die Patenterteilung: **07.01.2004**
(21) Anmeldenummer: 02002744.7
(22) Anmeldetag: 07.02.2002
(51) Int. Cl.: G05D 7/01, G05D 16/04, F16K 1/00

(54) **Regulierventil mit Druckentlastung**
Control valve with pressure release
Vanne de régulation avec décharge de pression

(30) Priorität: 26.03.2001 DE 10114995
(43) Veröffentlichungstag der Anmeldung: 02.10.2002
(73) Patentinhaber: F.W. Oventrop GmbH & Co. KG, 59939 Olsberg (DE)
(72) Erfinder: Jürgens, Egbert., D-34431 Marsberg-Bredelar (DE); Löffler, Gerhard., D-59939 Olsberg (DE)
(74) Vertreter: Patentanwälte Dipl.-Ing. Conrad Köchling Dipl.-Ing. Conrad-Joachim Köchling

(56) Entgegenhaltungen:
- EP-A- 0 751 448
- EP-A- 1 081 571
- GB-A- 1 355 898

## Beschreibung

Die Erfindung betrifft ein Regulierventil mit Druckentlastung zum Einbau in den Vor- und/oder Rücklauf von Heizungs- oder Kühlanlagen zur Voreinstellung und/oder Regelung des Differenzdruckes und/oder des Volumenstromes, bestehend aus einem Ventilgehäuse mit Strömungseinlaß und -auslaß, einem dazwischen angeordneten Ventilsitz, einem Ventilkörper, der von einem Weggeber, zum Beispiel in Form eines Thermostaten, eines elektrischen Antriebes oder eines anderen Stellgliedes, zum Ventilsitz hin oder von diesem weg bewegbar ist, einem Voreinstellteil zur Begrenzung des Volumenstromes bzw. des Einstellbereiches des Volumenstromes, sowie einer Vorrichtung zur Druckentlastung am Ventilkörper, wobei ein im Strömungsbereich hinter dem Ventilkörper befindlicher Hohlraum durch den Ventilkörper und das Voreinstellteil gebildet oder umgrenzt ist.

Derartige Ventile sind beispielsweise aus der DE 44 16 154 C2, der DE 689 05 814 T2, der US 58 60 591, der DE 37 41 676 C2 und der DE 26 15 895 C3 bekannt.

Solche Ventile dienen dazu, die Strömungsgrößen, die oben angegeben sind, an anlagenspezifische Betriebsbedingungen anzupassen. So werden beispielsweise Ventile nach der DE 26 15 895 C3 eingesetzt, um den Volumenstrombereich durch eine Voreinstellhülse zu begrenzen, während innerhalb dieser Hülse eine Kombination aus einem Ventilkörper und einer Ventilsitzanordnung den Volumenstrom aufgrund von Stellbefehlen von Weggebern verändert.

Als Weggeber können Thermostate, elektrische Antriebe oder andere Mittel eingesetzt werden. Bei Differenzdruck- oder Volumenstromreglern, wie beispielsweise nach der DE 689 05 814 T2 bestehen diese Weggeber häufig aus einer Membraneinheit, auf die eine Druckdifferenz, zum Beispiel aus Drücken zwischen Vor- und Rücklauf der Heizungs- oder Kühlanlage, wirkt. Damit die Stellkräfte solcher Weggeber unabhängig von den am Ventilkörper herrschenden Druckdifferenzen sind, insbesondere wenn dieser im Schließbereich am Ventilsitz arbeitet, werden konstruktive Maßnahmen für eine Druckentlastung vorgesehen.

Bei einfachen Strangregulierventilen mit einer Hubbegrenzung zur Volumenstromeinstellung, die aus der betrieblichen Praxis bekannt sind, wird hierzu in einfacher Weise in Strömungsrichtung hinter dem Ventilkörper ein Hohlraum geschaffen, der über eine Bohrung im Ventilkörper mit dem Strömungsbereich vor dem Ventilkörper verbunden ist, wobei der Ventilkegel rückwärtig eine Verlängerung in Richtung der Handbetätigung des Strangregulierventiles aufweist und hiermit den Hohlraum zum Ventilkopfstück oder Ventilgehäuse abdichtet.

Bei den bekannten Differenzdruck- oder Volumenstromreglern, zum Beispiel nach der DE 44 16 154 C2 wird jedoch diese Druckentlastung durch separate konstruktive Elemente realisiert, die Bestandteile der Regeleinheit sind, was sich auf die Baugröße des Ventils nachteilig auswirkt. Zudem ist bei diesen Einrichtungen prinzipbedingt die Möglichkeit nicht gegeben, den Austausch der Weggeber während des Betriebes der Anlage durchzuführen.

Aus der EP 0751 448 A2 ist ein Regulierventil mit einem Weggeber und einem Voreinstellteil bekannt. Der Ventilkörper hat eine durchgehende Öffnung, die den Strömungsbereich vor dem Ventilkörper mit einem hinter dem Ventilkörper mit dem Weggeber gebildeten Hohlraum verbindet. Der Hohlraum hinter dem Ventilkörper wird dabei durch ein Führungsgehäuse gebildet, welches einerseits der Führung des Ventilkörpers dient und andererseits als Abstützung für eine Reglerfeder vorgesehen ist.

Ausgehend von dem eingangs bezeichneten Stand der Technik liegt der Erfindung
die Aufgabe zugrunde, ein Regulierventil gattungsgemäßer Art zu schaffen, mittels dessen unter Verwendung einfacher Bauteile und bei geringem Bauhöhenbedarf eine Druckentlastung vorgenommen werden kann, wobei zudem ein einfacher Austausch von Weggebern auch während des Betriebes der mit dem Regulierventil ausgestatteten Anlage möglich ist.

Zur Lösung dieser Aufgabe wird vorgeschlagen, dass der Ventilkörper mindestens eine den Hohlraum mit dem Strömungsbereich vor dem Ventilkörper verbindende Öffnung aufweist und dass der Ventilkörper den Hohlraum gegenüber dem Voreinstellteil abdichtet.

Gemäß dieser Ausbildung wird vom Voreinstellteil ein Hohlraum gebildet, der durch den Ventilkörper abgedichtet ist, wobei dieser Hohlraum durch die den Ventilkörper durchsetzende Öffnung mit dem vor dem Ventilkörper befindlichen Strömungsbereich verbunden ist. Auf diese Weise wird sehr einfach ein Druckausgleich geschaffen, wobei einfache, schon an sich notwendige Elemente, nämlich der Ventilkörper und das Voreinstellteil die Mittel bilden, die zur Druckentlastung erforderlich sind. Es wird hierdurch eine geringe Bauhöhe realisiert. Zudem ist es dadurch möglich, einen einfachen Austausch von Weggebern, die mit dem Regulierventil verbunden sind, vorzunehmen, insbesondere auch ohne dass die mit dem Regulierventil ausgestattete Anlage stillgesetzt wird.

Bezüglich der Verminderung der Bauhöhe wird zudem vorzugsweise vorgesehen, dass das Voreinstellteil mit dem Ventilsitz zusammenwirkt und mit diesem Drosselquerschnitte und/oder Dichtstellen bildet.

Insbesondere kann hierzu vorgesehen sein, dass das Voreinstellteil einen hülsenartigen, zum Ventilsitz vorragenden Kragen aufweist, der in seiner Mantelfläche Öffnungen aufweist und sich mit seinem Stirnrand flüssigkeitsdicht und um die Längsachse des Teils drehbar auf dem Ventilsitz abstützt, so dass durch Drehung des Voreinstellteils unterschiedliche Voreinstellquerschnitte freigelegt werden, wobei der Ventilkörper sich innenseitig des Kragens dicht abstützt, oder dass das Voreinstellteil axial verstellbar ist, so dass zwischen dem Stirnrand des hülsenartigen Kragens und dem Ventilsitz ein drosselnder Voreinstellquerschnitt gebildet ist, wobei wiederum der Ventilkörper sich innenseitig des Kragens dicht abstützt.

Hinsichtlich der Bauhöhenminimierung ist es ebenso vorteilhaft, wenn der Ventilkörper ein einstückiges Dichtelement aufweist, das mittels des Weggebers unabhängig vom Voreinstellteil in Richtung auf den Ventilsitz zu oder von diesem weg bewegbar ist und dabei mit dem Voreinstellteil in Dichteingriff steht.

Dabei ist vorzugsweise vorgesehen, dass der Ventilkörper ein topfartig geformtes Dichtelement aufweist oder aus diesem besteht, wobei dessen Boden mit dem Ventilsitz zusammenwirkt und dessen nach radial außen vorragender Mündungsrand dichtend an der umgehenden Fläche des Voreinstellteils anliegt.

Insbesondere bei höheren Drücken, ist vorzugsweise vorgesehen, dass das topfartig geformte Dichtelement innenseitig durch ein formstabiles Bauteil abgestützt ist.

Aus dem gleichen Grunde kann vorgesehen sein, dass der
Boden des topfartig geformten Dichtelementes durch ein formstabiles Bauteil abgestützt ist, dessen Umfangsrand hinter dem darüber radial vorragenden Bodenrand des Dichtelementes zurückliegt.

Ausführungsbeispiele der Erfindung sind in der Zeichnung dargestellt und im folgenden näher beschrieben.

Es zeigt:
- Figur 1: eine erste Ausführungsform im Schnitt gesehen;
- Figur 2: eine Ausschnittsvergrößerung eines Details der Figur 1 ebenfalls im Schnitt gesehen;
- Figur 3: eine Ausschnittsvergrößerung der Figur 2 im Schnitt gesehen;
- Figur 4: eine Variante in der Ansicht gemäß Figur 1;
- Figur 5: die Variante in der Ansicht gemäß Figur 3.

In den Figuren ist ein Regulierventil 1 mit Druckentlastung gezeigt, welches zum Einbau in den Vor- oder Rücklauf von Heizungs- oder Kühlanlagen bestimmt ist und zur Voreinstellung und/oder Regelung des Differendruckes und/oder des Volumenstromes dient. Das Regulierventil besteht im wesentlichen aus einem Ventilgehäuse 2 mit einem Strömungseinlaß 3 und einem Strömungsauslaß 4, einem dazwischen angeordneten Ventilsitz 5, einem Ventilkörper 6, einem Voreinstellteil 7 sowie einer später noch näher beschriebenen Vorrichtung zur Druckentlastung am Ventilkörper 6. Der Ventilkörper 6 weist einen Ventilstößel 8 auf, auf den ein Weggeber 9 einwirkt, so dass der Ventilkörper 6 durch den Weggeber 9 zum Ventilsitz 5 hin oder von diesem weg bewegbar ist. Weggeber 9 der in der Zeichnung dargestellten Art, sind im Prinzip aus dem Stand der Technik bekannt.

Damit die Stellkräfte der Weggeber 9 unabhängig von den am Ventilkörper 6 herrschenden Druckdifferenzen sind, sind konstruktive Maßnahmen für eine Druckentlastung vorgesehen. Hierzu ist in Strömungsrichtung hinter dem Ventilkörper 6 ein Hohlraum 10 vorgesehen, der durch den Ventilkörper 6 und Bestandteile des Voreinstellteils 7 begrenzt ist. Der Ventilkörper 6 weist eine den Hohlraum 10 mit dem Strömungsbereich vor dem Ventilkörper 6 verbindende Öffnung 11, 12 auf, wobei der Ventilkörper 6 den Hohlraum gegenüber dem Voreinstellteil 7 abdichtet. Es ist somit ein Druckausgleich zwischen dem vor dem Ventilkörper 6 anstehenden Druck (Pfeile 13) und dem in dem Hohlraum 10 bestehenden Druck (Pfeile 14) geschaffen.

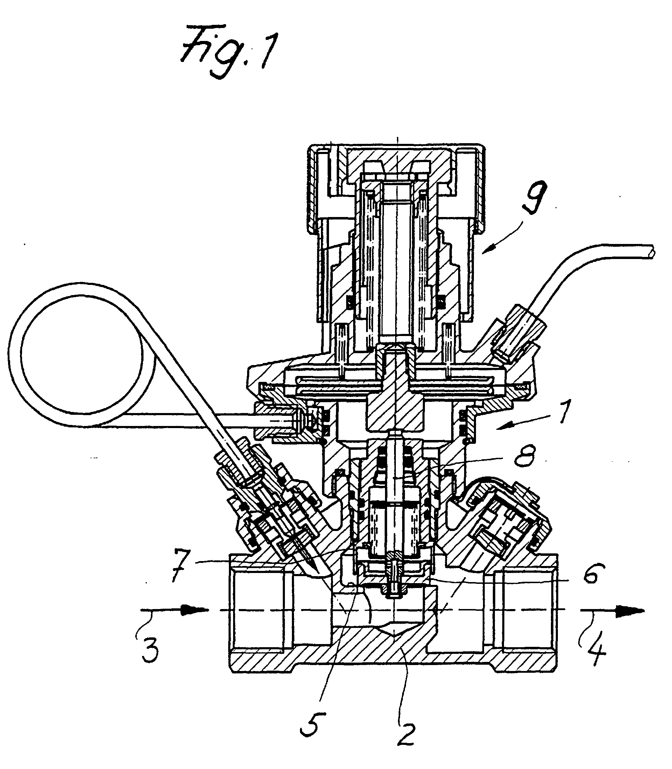

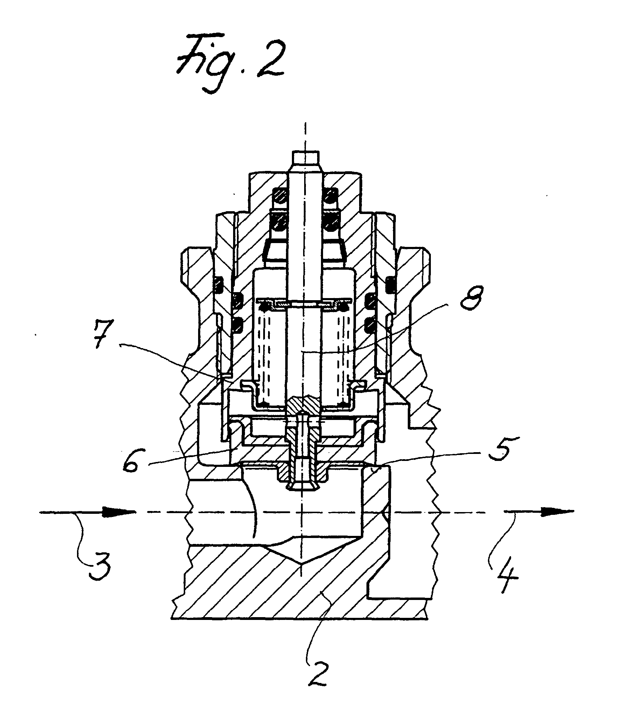

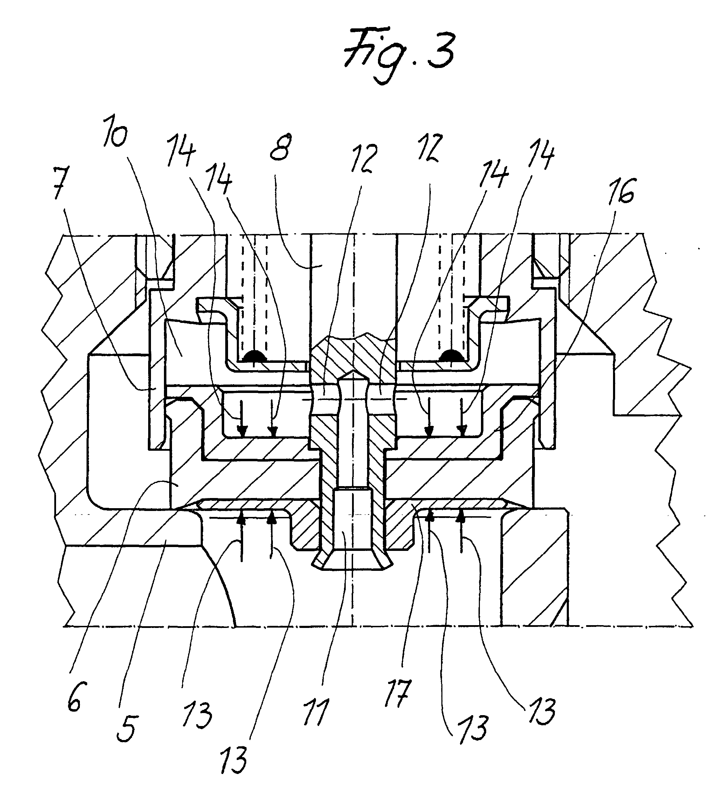

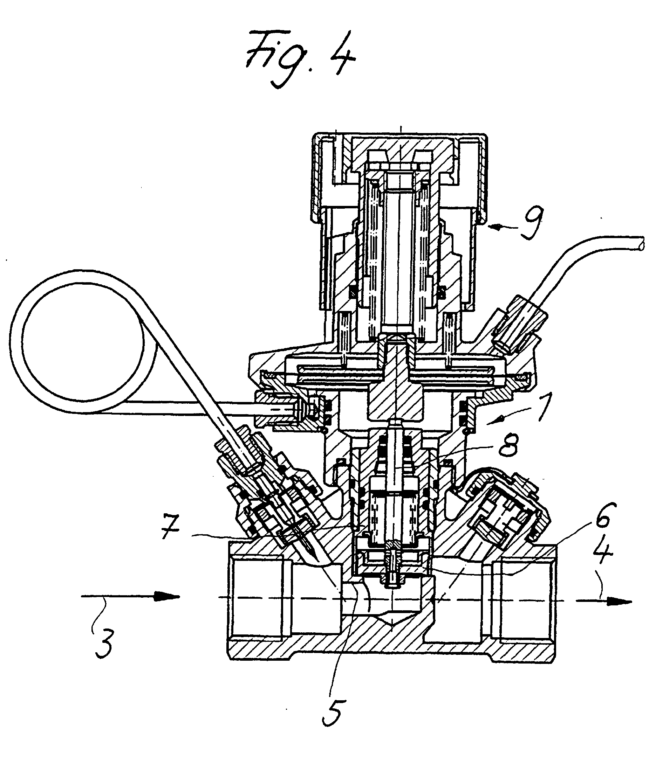

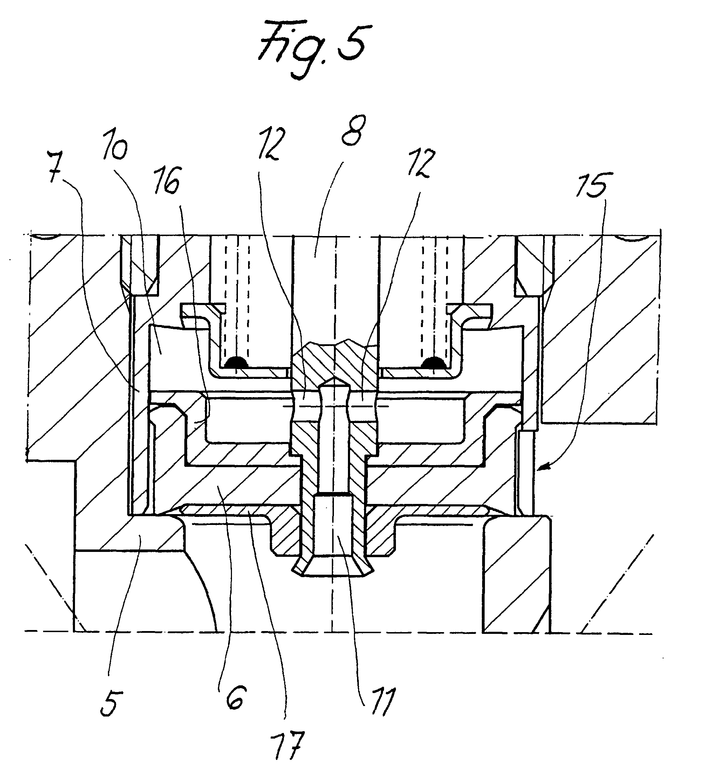

Das Voreinstellteil 7 wirkt vorzugsweise mit dem Ventilsitz 5 zusammen und bildet mit diesem Drosselquerschnitte und/oder Dichtstellen. Bei der Ausführungsform nach Figur 1 bis 3 weist das Voreinstellteil 7 einen hülsenartigen, zum Ventilsitz 5 vorragenden Kragen auf, wobei das Einstellteil 7 durch entsprechende Manipulation axial verstellbar ist, so dass zwischen dem Stirnrand des hülsenartigen Kragens und dem Ventilsitz 5 ein drosselnder Voreinstellquerschnitt gebildet ist. Der Ventilkörper 6 stützt sich innenseitig des Kragens des Verstellteiles 7 dichtend ab. Bei der Ausführungsform nach Figur 4 und 5 weist ebenfalls das Voreinstellteil 7 einen hülsenartigen, zum Ventilsitz 5 vorragenden Kragen auf, der in seiner Mantelfläche Öffnungen 15 aufweist und sich mit seinem Stirnrand flüssigkeitsdicht und um seine Längsachse drehbar auf dem Ventilsitz 5 abstützt, so dass durch Drehung des Voreinstellteils 7 unterschiedliche Voreinstellquerschnitte freigelegt werden. Auch hierbei stützt sich der Ventilkörper 6 innenseitig des Kragens dichtend ab.

Der Ventilkörper 6 weist ein einstückiges Dichtelement auf, welches beispielsweise aus gummielastischem Werkstoff bestehen kann, das mittels des Weggebers 9 unabhängig vom Voreinstellteil 7 in Richtung auf den Ventilsitz zu oder von diesem weg bewegbar ist und dabei mit dem Voreinstellteil 7 in dichtendem Eingriff bleibt. Insbesondere ist der Ventilkörper 6 ein topfartig geformtes Dichtelement, wobei dessen Boden mit dem Ventilsitz 5 zusammenwirkt und dessen nach radial außen vorragender Mündungsrand dichtend an der umgebenden Fläche des Kragens des Voreinstellteils 7 anliegt. Für höhere Druckbelastungen ist das topfartig geformte Dichtelement innenseitig durch ein formstabiles Bauteil 16 abgestützt, welches ebenfalls vorzugsweise topfartig ausgebildet ist, während der Boden des topfartig geformten Dichtelementes durch ein weiteres formstabiles Bauteil 17 abgestützt ist, dessen Umfangsrand hinter dem darüber radial vorragenden Bodenrand des Dichtelementes zurückliegt.

Aufgrund der vorgeschlagenen Ausbildung ist die notwendige Druckentlastung erreicht, wobei insgesamt eine geringe Bauhöhe der funktionellen Elemente erreicht ist und auch auf ohnehin vorhandene Bauteile zurückgegriffen werden kann, so dass zusätzliche Bauteile nicht erforderlich sind. Die erfindungsgemäße Gestaltung ermöglicht es auch, den Weggeber 9 während des Betriebes der Anlage, die mit dem Regulierventil ausgestattet ist, zu wechseln.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Regulierventil (1) mit Druckentlastung zum Einbau in den Vor- und/oder Rücklauf von Heizungs- oder Kühlanlagen zur Voreinstellung und/oder Regelung des Differenzdruckes und/oder des Volumenstromes, bestehend aus einem Ventilgehäuse (2) mit Strömungseinlaß (3) und -auslaß (4), einem dazwischen angeordneten Ventilsitz (5), einem Ventilkörper (6), der von einem Weggeber (9), zum Beispiel in Form eines Thermostaten, eines elektrischen Antriebes oder eines anderen Stellgliedes, zum Ventilsitz (5) hin oder von diesem weg bewegbar ist, einem Voreinstellteil (7) zur Begrenzung des Volumenstromes bzw. des Einstellbereiches des Volumenstromes, sowie einer Vorrichtung zur Druckentlastung am Ventilkörper (6), wobei ein im Strömungsbereich hinter dem Ventilkörper (6) befindlicher Hohlraum (10) durch den Ventilkörper (6) und das Voreinstellteil (7) gebildet oder umgrenzt ist, **dadurch gekennzeichnet, dass** der Ventilkörper (6) mindestens eine den Hohlraum (10) mit dem Strömungsbereich vor dem Ventilkörper (6) verbindende Öffnung (11,12) aufweist und dass der Ventilkörper (6) den Hohlraum (10) gegenüber dem Voreinstellteil (7) abdichtet.

2. Regulierventil nach Anspruch 1, **dadurch gekennzeichnet, dass** das Voreinstellteil (7) mit dem Ventilsitz (5) zusammenwirkt und mit diesem Drosselquerschnitte und/oder Dichtstellen bildet.

3. Regulierventil nach Anspruch 2, **dadurch gekennzeichnet, dass** das Voreinstellteil (7) einen hülsenartigen, zum Ventilsitz (5) vorragenden Kragen aufweist, der in seiner Mantelfläche Öffnungen (15) aufweist und sich mit seinem Stirnrand flüssigkeitsdicht und um die Längsachse des Teils drehbar auf dem Ventilsitz (5) abstützt, so dass durch Drehung des Voreinstellteils (7)unterschiedliche Voreinstellquerschnitte freigelegt werden, wobei der Ventilkörper (6) sich innenseitig des Kragens dicht abstützt, oder dass das Voreinstellteil (7) axial verstellbar ist, so dass zwischen dem Stirnrand des hülsenartigen Kragens und dem Ventilsitz (5) ein drosselnder Voreinstellquerschnitt gebildet ist, wobei wiederum der Ventilkörper (6) sich innenseitig des Kragens dicht abstützt.

4. Regulierventil nach einem der Ansprüche 1 bis 3, **dadurch gekennzeichnet, dass** der Ventilkörper (6) ein einstückiges Dichtelement aufweist, das mittels des Weggebers (9) unabhängig vom Voreinstellteil in Richtung auf den Ventilsitz (5) zu oder von diesem weg bewegbar ist und dabei mit dem Voreinstellteil (7) in Dichteingriff steht.

5. Regulierventil nach einem der Ansprüche 1 bis 4, **dadurch gekennzeichnet, dass** der Ventilkörper (6) ein topfartig geformtes Dichtelement aufweist oder aus diesem besteht, wobei dessen Boden mit dem Ventilsitz (5) zusammenwirkt und dessen nach radial außen vorragender Mündungsrand dichtend an der umgehenden Fläche des Voreinstellteils (7) anliegt.

6. Regulierventil nach Anspruch 5, **dadurch gekennzeichnet, dass** das topfartig geformte Dichtelement innenseitig durch ein formstabiles Bauteil (16) abgestützt ist.

7. Regulierventil nach Anspruch 5 oder 6, **dadurch gekennzeichnet, dass** der Boden des topfartig geformten Dichtelementes durch ein formstabiles Bauteil (17) abgestützt ist, dessen Umfangsrand hinter dem darüber radial vorragenden Bodenrand des Dichtelementes zurückliegt.

## Claims

1. A control valve (1) with pressure relief for installation in the flow pipe and/or return pipe of heating or cooling units for presetting and/or regulating the differential pressure and/or the volumetric flow, consisting of a valve housing (2) having a flow inlet (3) and a flow outlet (4), a valve seat (5) disposed therebetween, a valve body (6), which can be moved by a position encoder (9), for example in the form of a thermostat, of an electrical drive or another control element, towards the valve seat (5) or away from it, a presetting part (7) for limiting the volumetric flow or the setting range of the volumetric flow, and also a device for the pressure relief at the valve body (6), wherein a cavity (10) situated in the flow region behind the valve body (6) is formed by the valve body (6) and the presetting part (7),
**characterised in that** the valve body (6) comprises at least one aperture (11, 12) connecting the cavity (10) with the flow region in front of the valve body (6)
and **in that** the valve body (6) seals the cavity (10) from the presetting part (7).

2. A control valve according to Claim 1,
**characterised in that** the presetting part (7) interacts with the valve seat (5) and with it forms throttling cross sections and/or sealing points.

3. A control valve according to Claim 2,
**characterised in that** the presetting part (7) comprises a sleeve-type collar protruding to the valve seat (5), which comprises apertures (15) in its lateral surface and is supported on the valve seat (5) by its front end in fluid-tight manner and rotatably around the longitudinal axis of the part, so that by rotating the presetting part (8) different presetting cross sections are uncovered, wherein the valve body (6) is supported tightly on the inside of the collar,
or **in that** the presetting part (7) is axially adjustable so that a throttling presetting cross section is formed between the front edge of the sleeve-type collar and the valve seat (5), the valve body (6) again being tightly supported inside the collar.

4. A control valve according to one of Claims 1 to 3,
**characterised in that** the valve body (6) comprises a single-part sealing element which can be moved by means of the position encoder (9) independently of the presetting part towards the valve seat (5) or away from it and at the same time is in sealing engagement with the presetting part (7) .

5. A control valve according to one of Claims 1 to 4,
**characterised in that** the valve body (6) comprises a pot-shaped sealing element or consists of it, its bottom interacting with the valve seat (5) and its radially outwardly projecting orifice edge tightly abutting the enclosing face of the presetting part (7).

6. A control valve according to Claim 5,
**characterised in that** the pot-shaped sealing element is supported on the inside by a dimensionally stable component (16).

7. A control valve according to Claim 5 or 6,
**characterised in that** the bottom of the pot-shaped sealing element is supported by a dimensionally stable component (17), the peripheral edge of which lies behind the bottom edge of the sealing element which radially projects over it.

## Revendications

1. Vanne de régulation (1) comprenant une décharge de pression à monter dans le circuit aller et/ou dans le circuit de retour d'installations de chauffage ou de refroidissement pour permettre un préréglage et/ou une régulation de la pression différentielle et/ou du courant volumique, se composant d'un boîtier de vanne (2) avec une entrée du flux d'écoulement (3) et une sortie du flux d'écoulement (4), d'un siège de vanne (5) situé entre les deux, d'un corps de vanne (6) qui peut être déplacé en direction du siège de vanne (5) ou être éloigné de celui-ci par un transmetteur ou fournisseur de trajet (9), par exemple sous la forme d'un thermostat, d'un moteur électrique ou d'un autre élément de réglage, d'un élément de préréglage (7) pour la limitation du courant volumique ou de la zone de réglage du courant volumique ainsi que d'un dispositif pour la décharge de la pression sur le corps de vanne (6), une cavité creuse (10) située dans la zone d'écoulement du flux derrière le corps de vanne (6) étant formée ou délimitée par le corps de vanne (6) et par l'élément de préréglage (7), **caractérisée en ce que** le corps de vanne (6) comprend au moins une ouverture (11, 12) reliant la cavité creuse (10) avec la zone d'écoulement du flux devant le corps de vanne (6) et **en ce que** le corps de vanne (6) réalise une étanchéité de la cavité creuse (10) par rapport à l'élément de préréglage (7).

2. Vanne de régulation selon la revendication 1, **caractérisée en ce que** l'élément de préréglage (7) est en interaction avec le siège de vanne (5) et forme avec celui-ci des sections d'étranglement et/ou des points formant une étanchéité.

3. Vanne de régulation selon la revendication 2, **caractérisée en ce que** l'élément de préréglage (7) comprend un collet en forme de douille s'avançant en direction du siège de vanne (5), qui comprend sur sa surface d'enveloppe des ouvertures (15) et qui s'appuie avec son bord frontal sur le siège de vanne (5) en assurant une étanchéité aux fluides tout en pouvant être tourné autour de l'axe longitudinal de l'élément, de sorte qu'une rotation de l'élément de préréglage (7) libère différentes sections de préréglage, alors que le corps de vanne (6) s'appuie en contact étroit du côté intérieur du collet, ou **en ce que** l'élément de préréglage (7) peut faire l'objet d'un déplacement axial, de sorte qu'entre le bord frontal du collet en forme de douille et le siège de vanne (5) est formée une section de préréglage assurant un étranglement, alors que le corps de vanne (6) s'appuie à nouveau en contact étroit du côté intérieur du collet.

4. Vanne de régulation selon l'une quelconque des revendications 1 à 3, **caractérisée en ce que** corps de vanne (6) comprend un élément d'étanchéité en une seule pièce qui peut, indépendamment de l'élément de préréglage, être déplacé en direction du siège de vanne (5) ou être éloigné de celui-ci à l'aide du transmetteur de trajet (9) en étant ainsi en contact d'étanchéité avec l'élément de préréglage (7).

5. Vanne de régulation selon l'une quelconque des revendications 1 à 4, **caractérisée en ce que** le corps de vanne (6) comprend un élément d'étanchéité ayant la forme d'un pot ou se compose de celui-ci, alors que son fond est en interaction avec le siège de vanne (5) et que son bord d'embouchure s'avançant dans le sens radial vers l'extérieur repose sur la surface environnante de l'élément de préréglage (7) en assurant une étanchéité.

6. Vanne de régulation selon la revendication 5, **caractérisée en ce que** l'élément d'étanchéité ayant la forme d'un pot est soutenu du côté intérieur par un composant de forme stable (16).

7. Vanne de régulation selon la revendication 5 ou 6, **caractérisée en ce que** le fond de l'élément d'étanchéité ayant la forme d'un pot est soutenu par un composant de forme stable (17), dont le bord périphérique est en retrait derrière le bord du fond de l'élément d'étanchéité s'avançant par-dessus dans le sens radial.
